(19) **Europäisches Patentamt**

**European Patent Office**

**Office européen des brevets**

(11) **EP 1 314 698 B1**

(12) **EUROPEAN PATENT SPECIFICATION**

(45) Date of publication and mention
of the grant of the patent:
**21.06.2006 Bulletin 2006/25**

(21) Application number: **01917738.5**

(22) Date of filing: **30.03.2001**

(51) Int Cl.:
*C02F 1/20* (2006.01)    *C01C 1/10* (2006.01)
*B01D 53/86* (2006.01)    *C02F 1/58* (2006.01)

(86) International application number:
**PCT/JP2001/002805**

(87) International publication number:
**WO 2002/014222 (21.02.2002 Gazette 2002/08)**

(54) **PROCESS AND APPARATUS FOR TREATING AMMONIA-CONTAINING WASTE WATER**

VERFAHREN UND VORRICHTUNG ZUR BEHANDLUNG VON AMMONIAKHALTIGEM ABWASSER

PROCEDE ET APPAREIL DE TRAITEMENT D'EAUX USEES CONTENANT DE L'AMMONIAQUE

(84) Designated Contracting States:
**DE FR GB IT**

(30) Priority: **10.08.2000 JP 2000243007**
**10.08.2000 JP 2000243466**

(43) Date of publication of application:
**28.05.2003 Bulletin 2003/22**

(73) Proprietor: **BABCOCK-HITACHI KABUSHIKI KAISHA**
**Tokyo 105-6170 (JP)**

(72) Inventors:
• **KIKKAWA, Hirofumi,**
**c/o Kure Res. Lab. of**
**Kure-shi, Hiroshima 737-0029 (JP)**
• **KATO, Yasuyoshi,**
**c/o Kure Res. Lab. of**
**Kure-shi, Hiroshima 737-0029 (JP)**
• **TAKAMOTO, Shigehito,**
**c/o Kure Res. Lab. of**
**Kure-shi, Hiroshima 737-0029 (JP)**

• **NAKAMOTO, Takanori,**
**c/o Kure Works of**
**Kure-shi, Hiroshima 737-0029 (JP)**

(74) Representative: **Jenkins, Peter David et al**
**PAGE WHITE & FARRER**
**54 Doughty Street**
**London WC1N 2LS (GB)**

(56) References cited:
**EP-A- 0 544 282**          **DE-A- 3 715 746**
**DE-A- 4 020 914**          **DE-A- 4 314 896**
**JP-A- 2 245 285**          **JP-A- 5 329 334**
**JP-A- 8 197 039**          **JP-A- 10 309 437**
**JP-A- 11 253 751**

• **PATENT ABSTRACTS OF JAPAN vol. 1999, no. 14, 22 December 1999 (1999-12-22) -& JP 11 253751 A (NIPPON SHOKUBAI CO LTD), 21 September 1999 (1999-09-21)**
• **PATENT ABSTRACTS OF JAPAN vol. 1999, no. 02, 26 February 1999 (1999-02-26) -& JP 10 309437 A (HITACHI LTD;HITACHI PLANT ENG &AMP; CONSTR CO LTD), 24 November 1998 (1998-11-24)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

TECHNICAL FIELD

The present invention relates to a method and an apparatus for treating an effluent (waste water) containing ammonia ($NH_3$). More specifically, the present invention relates to a method and an apparatus for treating an $NH_3$-containing effluent by which method or apparatus the ammonia contained in the effluent discharged especially from a thermal power plant is efficiently converted into nitrogen ($N_2$) and water ($H_2O$) to make the ammonia harmless by a stripping method.

BACKGROUND ART

DE4020914 discloses gas purification by converting ammonia to nitrogen using a catalyst.
DE3715746 discloses a process for removing ammonia.
DE4314896 discloses catalytic ammonia conversion in waste gas.
JP11253751 discloses a method and device for controlling exhaust gas treatment.
JP10309437 discloses ammonia decomposition treatment apparatus.
In recent years, there has been a growing concern to the conservation of global environment, and regulations against over-fertilization of sea areas have been enforced. Thus, the development of a new technology for removing nitrogen from an effluent has been sought. In answer to such request, the removal of the nitrogen contained in an effluent has been conducted from some time ago mainly by the following methods:

1) Biological denitrification method: Method in which an organic nitrogen contained in water is converted into an inorganic nitrogen to render the organic nitrogen harmless by using a bacterium.
2) Discontinuous $NH_3$ decomposition method using chlorine: Method in which $NH_3$ is oxidized to decompose by using sodium hypochlorite.
3) Ion exchange method: Method in which $NH_3$ is adsorbed on a zeolite through an ion exchange.
4) Ammonia stripping method: Method in which the $NH_3$ contained in an $NH_3$-containing effluent is diffused or evaporated from the effluent into the atmosphere by using air or steam as carrier gas.

When the BOD (biochemical oxygen demand) of an effluent is high, biological denitrification method 1) described above is used. On the other hand, in the case where an effluent in which most of nitrogen is in a form of ammonia nitrogen such as ammonia and ammonium ion is to be treated, for instance, when an effluent from a process in a chemical factory or an effluent once-subjected to a post-treatment is the object of the treatment, method 2), 3) or 4) is used.
However, the conventional methods described above have the problems as follows:
In the method 1), the size of a reaction bath necessary for the treatment becomes large since the rate of a biological reaction is slow, and thus a large space comes to be required for placing the reaction bath. Besides, the method 1) raises a problem that excess amount of a sludge is produced. Method 2) causes problems that a treatment of remaining chlorine becomes necessary and organic chlorine compounds are formed, since the addition of sodium hypochlorite in an amount more than that stoichio-metrically required is necessary for completely removing the ammonia. In the method 3), a secondary effluent containing ammonium ion at a high concentration is produced at the time of regenerating a used zeolite and thus a treatment of the secondary effluent becomes necessary. Further, the method 4) has a problem of causing a secondary pollution, since the $NH_3$ contained in an effluent is first transferred into a gas phase and then the $NH_3$-containing gas is diffused or emitted into the atmosphere.
Among the methods described above, method 4) is advantageous compared with other methods since the treatment of an effluent is comparatively simple and the costs of equipments and operations are small. Accordingly, a combination in which the ammonia stripping method 4) is performed in combination with another method which can be used for oxidatively decompose the $NH_3$ contained in the gas resulting at the stripping at a high concentration by using a catalyst, to make the $NH_3$ originally contained in the effluent harmless as the result of the combination, has been adopted even in current night-soil treatment facilities.
However, in such conventional stripping and catalytically oxidizing process, it is necessary to install a catalyst tower for reducing NOx in addition to a catalyst tower for oxidizing $NH_3$ since a large quantity of NOx is formed at the time of the oxidation of $NH_3$. Further, according to the investigations by the present inventors, it has been found out that a large quantity of $N_2O$ is also produced in this process at the time of oxidizing the $NH_3$. Still further, there is a problem that the concentration of $N_2O$ in the gas at the outlet of a catalyst tower increases when the concentration of $NH_3$ in an effluent or the amount of an effluent to be supplied into a stripping tower was varied. Like $CO_2$, $N_2O$ is a substance contributing to the global warming. Accordingly, it is dangerous to the global environment that a large quantity of $N_2O$ is diffused into the atmosphere, to the same extent as $NH_3$ is diffused as it is. Thus, the diffusion of $N_2O$ is also undesirable.

Besides, there is a problem that the concentration of NOx in the gas at the outlet of a catalyst tower for reducing NOx increases at the time when the operation of the apparatus was started or when the concentration of $NH_3$ in the gas resulting at the stripping was varied.

DISCLOSURE OF THE INVENTION

A subject of the present invention is to provide a method for treating an $NH_3$-containing effluent in which method the amount of secondary pollution substances such as $N_2O$ and NOx incidentally formed is decreased and the amount of utilities such as a steam to be used is reduced.

Another subject of the present invention is to provide a method and an apparatus for treating an $NH_3$-containing effluent in which method and apparatus the concentration of the $N_2O$ in the gas at the outlet of a catalyst tower is not increased even if the concentration of $NH_3$ in an effluent and the amount of an effluent to be supplied into a stripping tower was varied, and the amount of hazardous substances formed is extremely small.

In order to achieve the subjects described above, the present invention is summarized as follows:

(1) A method for treating an $NH_3$-containing effluent comprising a stripping step in which the $NH_3$ contained in the $NH_3$-containing effluent is transferred from the effluent into a gas phase by contacting the effluent with a carrier gas, a step for decomposing the $NH_3$ into nitrogen and water by contacting the gas resulted at the stripping step and containing the $NH_3$ with a catalyst used for decomposing $NH_3$, at a prescribed temperature, characterised in that the method further comprises a step for determining the concentration of the nitrogen oxides (NOx) contained in the gas resulted at the $NH_3$ decomposing step, and a step for adjusting one or more of the following parameters:

(a) the amount of the $NH_3$-containing effluent to be supplied to the stripping step, and
(b) the concentration of the $NH_3$ contained in the $NH_3$-containing effluent,

so that the determined value of the concentration of the NOx contained in the gas resulted at the $NH_3$ decomposing step becomes lower than a prescribed value.

(2) The method for treating an $NH_3$-containing effluent recited in paragraph (1) above wherein the temperatures of the layer of the catalyst at plural points located along the direction of the gas flow at the $NH_3$ decomposing step are determined instead of determining the concentration of the NOx contained in the gas resulted at the $NH_3$ decomposing step, and one or more of the parameters (a) and (b) recited in paragraph (1) above are adjusted responding to the difference between the determined temperatures instead of the concentration of the NOx.

(3) The method for treating an $NH_3$-containing effluent recited in paragraph (1) or (2) above wherein the catalyst used for decomposing $NH_3$ comprises a first component having an activity of reducing NOx with $NH_3$ and a second component having an activity of forming NOx from $NH_3$.

(4) The method for treating an $NH_3$-containing effluent recited in paragraph (1) or (2) above wherein the catalyst used for decomposing $NH_3$ comprises, as a first component, an oxide of titanium (Ti) and an oxide of one or more elements selected from the group consisting of tungsten (W), vanadium (V), and molybdenum (Mo), and, as a second component, a silica, zeolite, and/or alumina having one or more noble metals selected from the group consisting of platinum (Pt), iridium (Ir), rhodium (Rh), and palladium (Pd) supported thereon.

(5) The method for treating an $NH_3$-containing effluent recited in paragraph (1) above wherein the catalyst used for decomposing $NH_3$ is a zeolite or comprises, as a main component, a zeolite.

(6) The method for treating an $NH_3$-containing effluent recited in paragraph (1) above wherein the method further comprises a step for removing ammonia from a part of the gas resulted at the $NH_3$ decomposing step after the part of the gas was discharged outside the system.

(7) A method for treating an $NH_3$-containing effluent comprising a stripping step in which the $NH_3$ contained in the $NH_3$-containing effluent is transferred from the effluent into a gas phase by contacting the effluent with a carrier gas, a step for decomposing the $NH_3$ into nitrogen and water by contacting the gas resulted at the stripping step and containing the $NH_3$ with a catalyst used for decomposing $NH_3$, at a prescribed temperature, and characterised in that the method further comprises a step for determining the concentration of the $N_2O$ contained in the gas resulted at the $NH_3$ decomposing step, and one of the following steps:

(i) a method in which the flow rate of the carrier gas at the step for transferring the $NH_3$ contained in the $NH_3$-containing effluent into the gas phase is adjusted,
(ii) a step in which a gas such as air is added to the $NH_3$-containing gas resulted at the step for transferring the $NH_3$ contained in the $NH_3$-containing effluent into the gas phase, and
(iii) a step in which a part of the gas resulted at the $NH_3$ decomposing step is circulated to the catalyst layer.

(8) The method for treating an $NH_3$-containing effluent recited in paragraph (7) above wherein the temperatures of the layer of the catalyst at plural points located along the direction of the gas flow at the $NH_3$ decomposing step are determined instead of determining the concentration of the $N_2O$ contained in the gas resulted at the $NH_3$ decomposing step, and one or more of the steps (i), (ii), and (iii) recited in paragraph (7) above are conducted responding to thy difference between the determined temperatures instead of the concentration of the $N_2O$.

(9) The method for treating an $NH_3$-containing effluent recited in paragraph (7) or (8) above wherein the catalyst used for decomposing $NH_3$ comprises a first component having an activity of reducing NOx with $NH_3$ and a second component having an activity of forming NOx from $NH_3$.

(10) The method for treating an $NH_3$-containing effluent recited in paragraph (7) or (8) above wherein the catalyst used for decomposing $NH_3$ comprises, as a first component, an oxide of titanium (Ti) and an oxide of one or more elements selected from the group consisting of tungsten (W), vanadium (V), and molybdenum (Mo), and, as a second component, a silica, zeolite, and/or alumina having one or more noble metals selected from the group consisting of platinum (Pt), iridium (Ir), rhodium (Rh), and palladium (Pd) supported thereon.

(11) The method for treating an $NH_3$-containing effluent recited in paragraph (7) or (8) above wherein the catalyst used for decomposing $NH_3$ is a zeolite or comprises, as a main component, a zeolite.

(12) The method for treating an $NH_3$-containing effluent recited in paragraph (7) or (8) above wherein the method further comprises a step for removing ammonia from a part of the gas resulted at the $NH_3$ decomposing step after the part of the gas was discharged outside the system.

(13) An apparatus for treating an $NH_3$-containing effluent comprising a stripping device in which the $NH_3$ contained in the $NH_3$-containing effluent is transferred from the effluent into a gas phase by contacting the effluent with a carrier gas, a device for decomposing the $NH_3$ into nitrogen and water by contacting the gas resulted in the stripping device and containing the $NH_3$ with a catalyst used for decomposing $NH_3$, at a prescribed temperature, characterised in that the apparatus further comprises a device for determining the concentration of the nitrogen oxides (NOx) contained in the gas resulted in the $NH_3$ decomposing device, and a device for adjusting one or more of the following parameters:

(a) the amount of the $NH_3$-containing effluent to be supplied to the stripping step, and
(b) the concentration of the $NH_3$ contained in the $NH_3$-containing effluent, so that the determined value of the concentration of the NOx contained in the gas resulted in the $NH_3$ decomposing device becomes lower than a prescribed value.

(14) An apparatus for treating an $NH_3$-containing effluent comprising a stripping device in which the $NH_3$ contained in the $NH_3$-containing effluent is transferred from the effluent into a gas phase by contacting the effluent with a carrier gas, a device for decomposing the $NH_3$ into nitrogen and water by contacting the gas resulted in the stripping device and containing the $NH_3$ with a catalyst used for decomposing $NH_3$, at a prescribed temperature, characterised in that the apparatus further comprises a device for determining the concentration of the $N_2O$ contained in the gas resulted in the $NH_3$ decomposing device, and one of the following means:

(e) means in which the flow rate of the carrier gas at the step for transferring the $NH_3$ contained in the $NH_3$-containing effluent into the gas phase is adjusted,
(f) means in which a gas such as air is added to the $NH_3$-containing gas resulted at the step for transferring the $NH_3$ contained in the $NH_3$-containing effluent into the gas phase, and
(g) means in which a part of the gas resulted at the $NH_3$ decomposing step is circulated to the catalyst layer, so that the determined value of the concentration of the $N_2O$ contained in the gas resulted in the $NH_3$ decomposing device becomes lower than a prescribed value.

As a specific example of the catalyst used in the present invention and comprising a first component having an activity of reducing nitrogen oxides with $NH_3$ and a second component having an activity of forming nitrogen oxides (NOx), catalysts comprising, as a first component, an oxide of titanium (Ti) and an oxide of one or more elements selected from the group consisting of tungsten (W), vanadium (V), and molybdenum (Mo), and, as a second component, a silica, zeolite, and/or alumina having one or more noble metals selected from the group consisting of platinum (Pt), iridium (Ir), rhodium (Rh), and palladium (Pd) supported thereon can be mentioned. Besides, a catalyst substantially consisting of a zeolite or comprising, as a main component, a zeolite has an effect of considerably reducing the formation of NOx or $N_2O$.

By changing the ratio of the first component to the second component in the catalyst described above, it is possible to adjust the concentrations of $NH_3$ and NOx in the gas resulted in the $NH_3$ decomposing step. For instance, when the ratio of the second component was reduced, the ratio of decomposition of $NH_3$ is slightly lowered, but the concentration of NOx in the resulting gas is considerably reduced.

In order to transfer the $NH_3$ contained in an $NH_3$-containing effluent from the effluent into a gas phase, a method in which the $NH_3$ contained in the effluent is stripped into the gas phase, specifically, for example, (a) a method in which a carrier gas is blown into the effluent, and (b) a method in which the effluent is sprayed in a carrier gas are used. When the effluent has a pH of 10 or higher, the stripping is performed as it is. On the other hand, when the effluent has a pH of lower than 10, an alkali such as sodium hydroxide and calcium hydroxide (slaked lime) is first added to the effluent to make its pH 10 or higher, and then the effluent is contacted with air to diffuse or evaporate the $NH_3$ into the air by using the air as a carrier gas. As the carrier gas, a steam can be used in place of air. The term "carrier gas" as used herein generically means a gas which gas can diffuse or evaporate ammonia from the effluent.

An $NH_3$-containing gas is preheated just before the gas is introduced into a stripping tower or catalyst tower, when necessary. Preheating may be conducted by a usual method, for example, by heating with a burner or heat exchange with a gas at a high temperature such as a steam or a gas discharged from a catalyst device. When the gas is circulated in the method and apparatus of the present invention, it is preferable to use a procedure in which the composition of the gas, especially the concentration of oxygen in the gas is not changed. (As an example, therefore, a method using an indirect heat exchange is preferable.)

In the case where an $NH_3$ decomposing catalyst having a denitrating function is used, it is important to control the temperature of a catalyst layer placed within a catalyst tower in the range of 250 to 450°C, preferably in the range of 350 to 400°C. In the case where a zeolite type catalyst is used, it is preferable to maintain the temperature of a catalyst layer in the range of 450 to 600°C. In any case, it is satisfactory that a suitable temperature is selected based on the performances of a catalyst.

The term "$NH_3$-containing effluent" used herein means an effluent containing ammonia nitrogen, such as an effluent discharged from a drain treating plant or sewerage treating facility, and an effluent discharged from a dry type electrostatic precipitator or a wet type desulfurizing apparatus installed for removing combustion ashes or SOx contained in an exhaust gas discharged from a thermal power plant having a coal firing boiler or oil firing boiler. Also, the term "$NH_3$-containing effluent" includes effluents which contain an nitrogen converted into ammonia nitrogen by a pretreatment, such as an effluent in which an organic nitrogen originally contained in the effluent was decomposed into strippable ammonia nitrogen by a general biological treatment, and an effluent containing $NH_3$ at a high concentration and discharged at the time of the regeneration of a zeolite in a conventional ion exchange method used in various fields of industry.

BRIEF DESCRIPTION OF THE DRAWINGS

Fig. 1 is a diagram for illustrating an embodiment of the methods for treating an $NH_3$-containing effluent and the arrangements of devices in the apparatuses of the present invention.

Fig. 2 is a line graph showing experimental data relating to the apparatus shown in Fig. 1.

Fig. 3 is a line graph showing other experimental data relating to the apparatus shown in Fig. 1.

Fig. 4 is a diagram for illustrating another embodiment of the methods and the arrangements of devices in the apparatuses of the present invention.

Fig. 5 is a diagram for illustrating still another embodiment of the methods and the arrangements of devices in the apparatuses of the present invention.

Fig. 6 is a diagram for illustrating still another embodiment of the methods and the arrangements of devices in the apparatuses of the present invention.

Fig. 7 is a schematic diagram for illustrating the effects of a catalyst used in the present invention.

Fig. 8 is a diagram for illustrating still another embodiment of the methods and the arrangements of devices in the apparatuses of the present invention.

Fig. 9 is a line graph showing experimental data relating to the apparatus shown in Fig. 8.

Fig. 10 is a line graph showing other experimental data relating to the apparatus shown in Fig. 8.

Fig. 11 is a diagram for illustrating still another embodiment of the methods and the arrangements of devices in the apparatuses of the present invention.

Fig. 12 is a diagram for illustrating still another embodiment of the methods and the arrangements of devices in the apparatuses of the present invention.

Fig. 13 is a diagram for illustrating still another embodiment of the methods and the arrangements of devices in the apparatuses of the present invention.

Fig. 14 is a diagram for illustrating still another embodiment of the methods and the arrangements of devices in the apparatuses of the present invention.

Fig. 15 is a line graph showing experimental data relating to the apparatus shown in Fig. 14.

Fig. 16 is a line graph showing other experimental data relating to the apparatus shown in Fig. 14.

Fig. 17 is a diagram for illustrating still another embodiment of the methods and the arrangements of devices in the apparatuses of the present invention.

Fig. 18 is a diagram for illustrating still another embodiment of the methods and the arrangements of devices in the apparatuses of the present invention.

Fig. 19 is a diagram for illustrating still another embodiment of the methods and the arrangements of devices in the apparatuses of the present invention.

Fig. 20 is a diagram for illustrating still another embodiment of the methods and the arrangements of devices in the apparatuses of the present invention.


BEST MODE FOR CARRYING OUT THE INVENTION

Now, the embodiments of the present invention are described in more detail with reference to drawings.

The model of a small pore in an $NH_3$ decomposing catalyst having a denitrating function and used in the present invention is shown in Fig. 7.

As demonstrated in Fig. 7, the pore has a structure in which micro-pores formed by (or inherently contained in) a porous silica exist at places within a relatively macro-pore formed by a component (first component) on the surface of which NO is reduced by $NH_3$, and ultramicro-particles of another component (second component) having an activity of forming NOx from $NH_3$ are supported on the surface of the silica. $NH_3$ diffuses within the macro-pore in a catalyst, the diffused $NH_3$ is oxidized on the second component to form NO according to the equation (1) described below, the NO collide with $NH_3$ adsorbed on the surface of the first component (which forms the macro-pore), in the course of diffusing outside the catalyst, and the $NH_3$ is reduced down to $N_2$ according to the equation (2) described below. As a whole, the $NH_3$ is changed as shown by equation (3) described below.

$$NH_3 + 5/4O_2 \rightarrow NO + 3/2H_2O \qquad (1)$$

$$NH_3 + NO + 1/4O_2 \rightarrow N_2 + 3/2H_2O \qquad (2)$$

$$NH_3 + 3/4O_2 \rightarrow 1/2N_2 + 3/2H_2O \qquad (3)$$

As described above, when an $NH_3$ decomposing catalyst having a denitrating function is used, it is possible to reduce $NH_3$ to $N_2$ while scarcely forming, as a final product, NO or $N_2O$ which is generally considered to be formed during the process of forming NO, since the oxidizing reaction of $NH_3$ and the reducing reaction of formed NO with $NH_3$ proceed within the catalyst.

Besides, even when a zeolite is used, the amount of NO or $N_2O$ incidentally formed is extremely small.

However, even in the case where such catalyst is used, a phenomenon in which the concentration of NO in the gas at the outlet of a catalyst tower becomes slightly high when the concentration of $NH_3$ in an effluent is high is observed. Although the reason for the phenomenon has not yet completely been cleared, it can be considered to be due to the fact that the reactions of the equations (1) and (2) are exothermic, and the temperature of the catalyst itself is varied when the concentration of $NH_3$ in the gas to be contacted with a catalyst changes. As a result of diligent investigations by the present inventors, it has now been found out that the means described below is effective to such a passing or transient increase of the concentration of NO in the gas at the outlet of a catalyst tower.

When the concentration of NOx in the gas at the outlet of a catalyst tower was determined and the determined value of the concentration of the NOx was found to be higher than a certain value, one or more of the following parameters are adjusted:

(a) the amount of an $NH_3$-containing effluent to be supplied to a stripping step,
(b) the concentration of the $NH_3$ contained in an $NH_3$-containing effluent, and
(c) the flow rate of an $NH_3$-containing gas to be contacted with a catalyst.

More specifically, the means described above is to decrease (a) the amount of an $NH_3$-containing effluent to be supplied, (b) the concentration of the $NH_3$ contained in an $NH_3$-containing effluent, or (c) the flow rate of an $NH_3$-containing gas to be contacted with a catalyst.

When (a) the amount of an $NH_3$-containing effluent to be supplied or (b) the concentration of the $NH_3$ contained in an $NH_3$-containing effluent was reduced, the concentration of $NH_3$ in the gas to be contacted with a catalyst is also decreased, and thus the temperature of the catalyst itself is stabilized earlier than usual. As the result, the concentration of the NOx in the gas at the outlet of a catalyst tower is also decreased. When the concentration of the NOx at the outlet of a catalyst tower became lower than a certain value, a prescribed amount of an effluent can be treated by gradually increasing (a) the amount of an $NH_3$-containing effluent to be supplied or (b) the concentration of the $NH_3$ contained in an $NH_3$-containing effluent while monitoring the concentration of the NOx in the gas at the outlet of a catalyst tower. Further, when the flow rate of an $NH_3$-containing gas to be contacted with a catalyst was reduced, the contact time of the gas with the catalyst becomes longer, and thus a prescribed amount of an effluent can be treated by gradually increasing (c) the flow rate of an $NH_3$-containing gas to be contacted with the catalyst while monitoring the concentration of the NOx.

Besides, in order to prevent the rise in the concentration of NOx in the gas at the outlet of a catalyst tower above a certain value, a method in which the gas is circulated to a stripping tower or to the inlet of a catalyst tower depending on the concentration of NOx in the gas at the outlet of a catalyst tower is also effective.

When such catalyst is used, the difference in the composition of a gas between before and after the reaction is that only the amounts of $NH_3$ and $O_2$ decrease, and $N_2$ and $H_2O$ are formed as shown by the equation (3) described above. Since the concentration of $NH_3$ contained in a gas to be treated is usually a few thousands ppm, there is not a case where the chemical composition of the gas is largely changed by the reaction.

Thus, it becomes possible to circulate a part of the gas which was subjected to the $NH_3$ decomposition treatment (hereinafter the gas is referred to as post-treatment gas), to a stripping tower as a part of a carrier gas by introducing air in an amount commensurate with the amount of oxygen consumed in the reaction, into a catalyst tower, and discharging an increased amount of the gas outside the system. Since the amount of the gas to be discharged outside the system becomes about a few tenths that in conventional methods by conducting such operation, an absolute amount of the gas discharged outside the system can be considerably reduced. Even in this case, when the concentration of Nox in the gas at the outlet of a catalyst tower became lower than a certain value, it is satisfactory to reduce the amount of the gas to be circulated, and eventually return all the gas into a previous gas flow while monitoring the concentration of the NOx in the gas at the outlet of the catalyst tower.

In this connection, it can consider determining the concentration of $NH_3$ in the gas at the outlet of a catalyst tower instead of the concentration of the NOx. However, it is difficult to accurately determine the concentration of $NH_3$ in the gas since $NH_3$ is ready to dissolve in water.

First embodiment of the present invention:

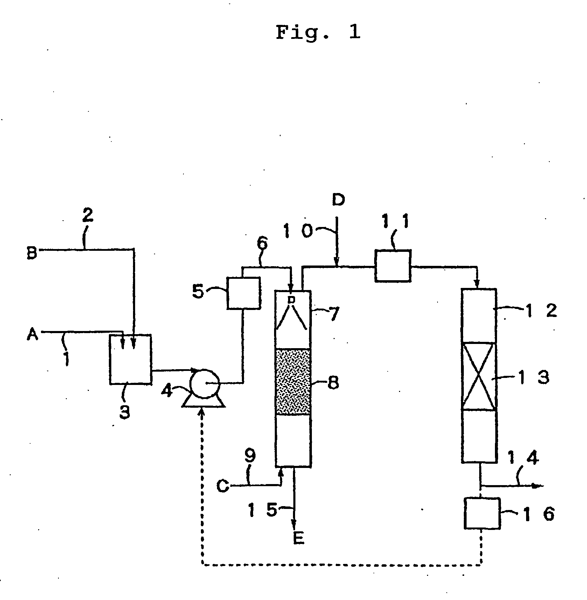

Fig. 1 is a diagram for illustrating a system of devices (hereinafter referred to as device system) used when a process of the present invention for treating an $NH_3$-containing effluent is applied to an effluent containing an ammonia nitrogen at a high concentration, for example, an effluent discharged from a thermal power plant.

As shown in Fig. 1, effluent A and alkali B are supplied to tank 3 through pipe 1 and pipe 2, respectively, mixed in tank 3, and then fed to pre-heater 5 with pump 4. The effluent A preheated with pre-heater 5 up to about 100°C is supplied to a top portion of stripping tower 7 through pipe 6. Within stripping tower 7 is placed packing material 8, and steam C (including air) supplied as a carrier gas through pipe 9 connected to a bottom portion of the tower rises through stripping tower 7 while efficiently contacting in the tower with effluent A to obtain a gas containing ammonia at a high concentration. The concentration of $NH_3$ in the gas thus obtained is usually a few thousands to a few tens of thousands ppm. The gas obtained is introduced into catalyst tower 12 after diluted with air D supplied through pipe 10 when necessary and preheated up to a prescribed temperature with pre-heater 11 according to circumstances. The ammonia contained in the gas is oxidized to decompose into $N_2$ and $H_2O$ on catalyst layer 13 placed in catalyst tower 12 and then discharged through pipe 14 into the atmosphere. A part of the gas is fed to NOx meter 16 and the concentration NOx in the gas is determined therewith.

Responding to the value determined by NOx meter 16, the flow rate of effluent A supplied with pump 4 to a top portion of stripping tower 7 is adjusted by means of a flow rate control line. From pipe 15 connected to a bottom portion of stripping tower 7, effluent E resulted by removing ammonia from effluent A is discharged. In this connection, the catalyst used in this embodiment comprises a first component having an activity of reducing nitrogen oxides with $NH_3$ and a second component having an activity of forming nitrogen oxides (NOx) from $NH_3$. Further, the reaction temperature in catalyst layer 13 at this time is usually 250 to 450°C and preferably 350 to 400°C.

The examples in which a catalyst of the present invention was applied in the apparatus (device system) shown in Fig. 1 are described below.

Example 1

Ammonium paratungstate $((NH_4)_{10}H_{10} \cdot W_{12}O_{16} \cdot 6H_2O)$ in an amount of 2.5 kg and 2.33 kg of ammonium metavanadate were added to 67 kg of a slurry of metatitanic acid ($TiO_2$ content: 30 wt %, $SO_4$ content: 8 wt %) and mixed by using a kneader. The paste thus obtained was granulated, dried, and then calcined at 550°C for 2 hours. The granules thus obtained were ground to obtain powders as a first component of a catalyst. The powders had a composition of Ti/W/V = 91/5/4 (ratio of atoms).

On the other hand, 500 g of fine powders of silica (produced by Tomita Pharmaceuticals Co., Ltd.; trade name: Micon F) was added to 1 L of $1.33 \times 10^{-2}$ wt % of chloroplatinic acid ($H_2[PtCl_6] \cdot 6H_2O$), evaporated to dryness on a sand bath, and then calcined at 500°C for 2 hours in the air to prepare 0.01 wt % Pt $\cdot$ $SiO_2$ powders as a second component of the catalyst.

Next, 5.3 kg of silica . alumina type inorganic fibers and 17 kg of water were added to the mixture of 20 kg of the first component and 40.1 g of the second component, and kneaded to obtain a catalyst paste. Separately, a net-like product made of E glass fibers was impregnated with a slurry containing a titania, silica sol and polyvinyl alcohol, dried at 150°C, and cut into plural sheets to prepare catalyst substrates. Between two of the catalyst substrates (sheets) was held the catalyst paste described above and they were passed through press rollers to roll, thereby obtaining a plate-like product. After the plate-like product was air-dried in the atmosphere for 12 hours, it was calcined at 500°C for 2 hours to obtain an $NH_3$ decomposing catalyst having a denitrating function. In the catalyst thus obtained, the ratio of the second component to the first component (the second component/the first component) was 0.2/99.8.

A test for treating an effluent was conducted by using the catalyst obtained in this example and the apparatus as shown in Fig. 1 under the conditions shown in Table 1.

However, when the reading of NOx meter 16 exceeded 5 ppm, the flow of effluent A supplied to a top portion of stripping tower 7 with pump 4 was once stopped and then the flow was controlled by an on-off switch.

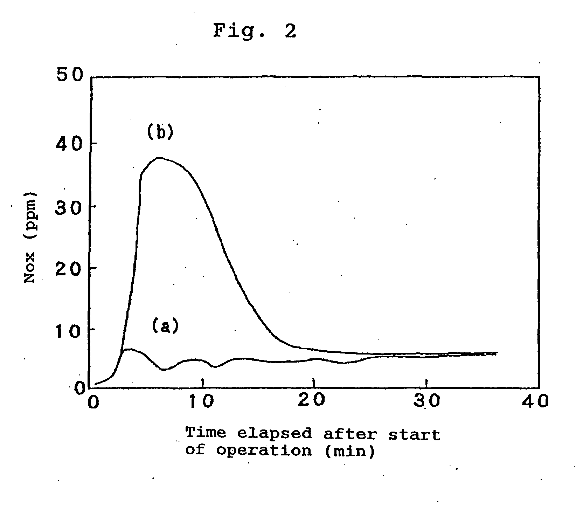

The relation between the concentration of NOx in the gas at the outlet of a catalyst tower and the time elapsed after the operation of the apparatus was started is shown by curve (a) in Fig. 2.

Table 1

| Item | Condition |
|---|---|
| Rate of treating effluent | 1.6 L/h |
| Amount of $NH_4^+$ in effluent | 2,000 mg/L |
| Gas flow rate at inlet of catalyst layer | 1.3 m$^3$/h |
| Gas composition | $NH_3$: 3,000 ppm<br>$H_2O$: 28 %<br>Air: the remainder |
| Temperature | 350°C |
| Areal velocity | 17 m/h |

Comparative Example 1

A test for treating an effluent was conducted using the same apparatus and catalyst as in Example 1 under the same conditions as those shown in Table 1 with the exception that NOx meter 16 and the line for controlling the flow rate of effluent A were omitted. The results thus obtained are shown by curve (b) in Fig. 2.

From Fig. 2, it can be understood that the concentration of NOx in the gas at the outlet of a catalyst tower at the time when the operation of the apparatus was started in Example 1 is remarkably low compared with

Comparative Example 1.

Example 2

A test for treating an effluent in case the concentration of $NH_4^+$ in the effluent is suddenly changed was conducted by using the same catalyst and the apparatus as those used in Example 1.

However, when the reading of NOx meter 16 exceeded 10 ppm after the concentration of $NH_4^+$ was suddenly increased, the flow of effluent A supplied to a top portion of stripping tower 7 with pump 4 was once stopped and then the flow was controlled by an on-off switch.

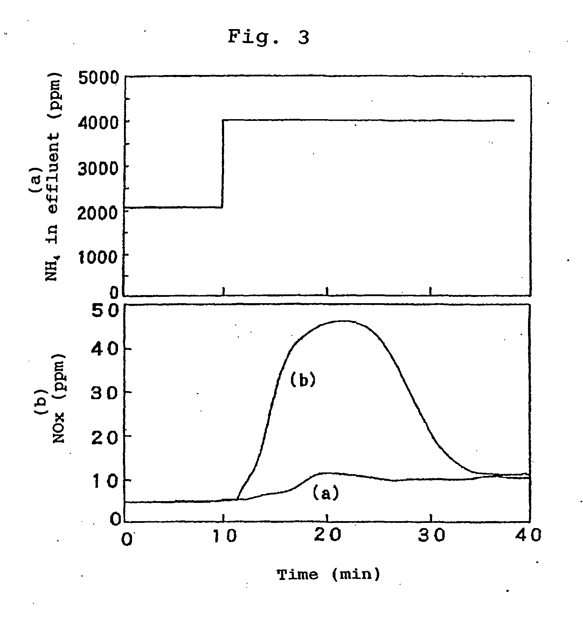

The relation between the concentration of NOx in the gas at the outlet of a catalyst tower and the time elapsed after the operation of the apparatus was started in this test is shown by curve (a) in Fig. 3.

Comparative Example 2

A test for treating an effluent was conducted by using the same apparatus as used in Comparative Example 1 under the same conditions as in Example 2. The results thus obtained are shown by curve (b) in Fig. 3.

As shown in Fig. 3, the concentration of NOx in the gas at the outlet of a catalyst tower at the time when the concentration of $NH_4^+$ in an effluent was suddenly increased in Example 2 is considerably low compared with Comparative Example 2.

Second embodiment of the present invention:

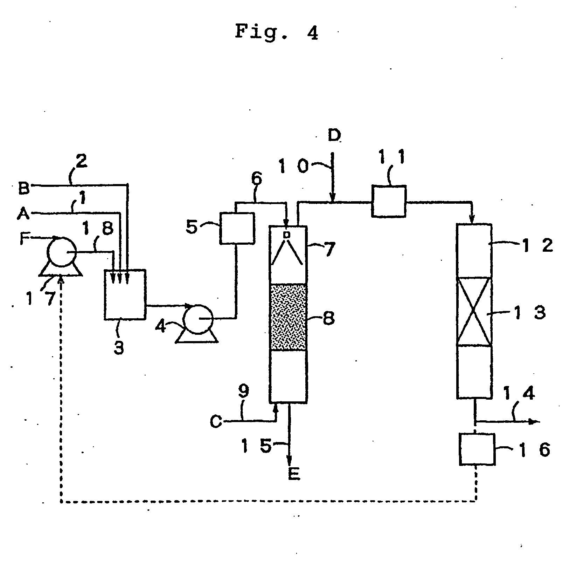

Fig. 4 shows the same apparatus (device system) as shown in Fig. 1 with the exception that the apparatus is planed to adjust the concentration of $NH_3$ in an $NH_3$-containing effluent instead of adjusting the amount of an $NH_3$-containing effluent to be supplied as described in Example 1 with reference to Fig. 1, and thus pump 17 for supplying water F into tank 3 responding to the NOx concentration transmitted from NOx meter 16 is provided.

In the apparatus shown in Fig. 4, effluent A and alkali B are supplied into tank 3 through pipe 1 and pipe 2, respectively, water F is also supplied into tank 3 through pipe 18 with pump 17, when necessary, and they are fed to pre-heater 5 with pump 4 after mixed in tank 3. The effluent A preheated up to about 150°C with pre-heater 5 is supplied to a top portion of stripping tower 7 through pipe 6. Within stripping tower 7 is placed packing material 8, and steam C (including air) supplied as a carrier gas through pipe 9 connected to a bottom portion of the tower rises through stripping tower 7 while efficiently contacting with effluent A in the tower to obtain a gas containing ammonia at a high concentration.

The concentration of $NH_3$ in the gas thus obtained is a few thousands to a few tens of thousands ppm. The gas obtained is introduced into catalyst tower 12 after diluted with air D supplied through pipe 10 when necessary and preheated up to a prescribed temperature with pre-heater 11 according to circumstances.

The ammonia stripped and contained in the gas is oxidized to decompose into $N_2$ and $H_2O$ on catalyst layer 13 and then discharged through pipe 14 into the atmosphere. A part of the gas resulted in the $NH_3$ decomposition is fed to NOx meter 16 and the concentration of NOx in the gas is determined therewith. Responding to the value determined by NOx meter 16, the flow rate of water F supplied to tank 3 with pump 17 is varied to adjust the concentration of $NH_3$ in an $NH_3$-containing effluent. From pipe 15 connected to a bottom portion of stripping tower 7, effluent E resulted by removing ammonia from effluent A is discharged.

Third embodiment of the present invention:

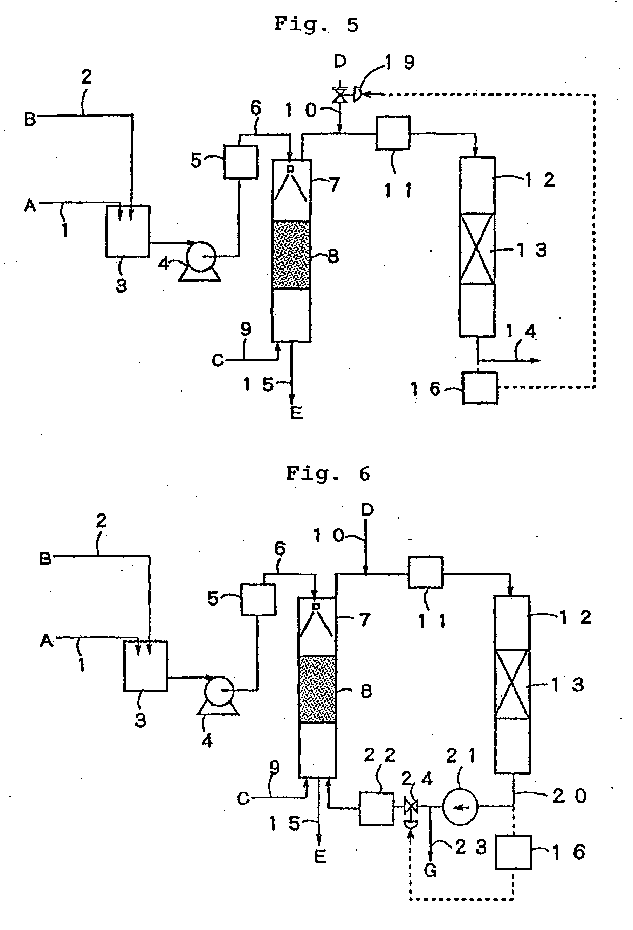

Fig. 5 shows the same apparatus (device system) as shown in Fig. 1 with the exception that the apparatus is planed to adjust the flow rate of an $NH_3$-containing gas to be contacted with a catalyst instead of adjusting the amount of an $NH_3$-containing effluent to be supplied as conducted in the apparatus as shown in Fig. 1 and thus regulating valve 19 for supplying air D into the gas subjected to the $NH_3$ stripping, responding to the NOx concentration transmitted from NOx meter 16, is provided.

In the apparatus shown in Fig. 5, the ammonia stripped and contained in the gas is oxidized to decompose into $N_2$ and $H_2O$ on catalyst layer 13 and then discharged through pipe 14 into the atmosphere. A part of the gas resulted in the $NH_3$ decomposition is fed to NOx meter 16 and the concentration NOx in the gas is determined therewith. Responding to the value determined by NOx meter 16, the flow rate of air D supplied through pipe 10 is adjusted with regulating valve 19.

Fourth embodiment of the present invention:

Fig. 6 shows an apparatus (device system) in which the concentration of NOx in the gas at the outlet of a catalyst tower is adjusted by circulating a part of the gas.

In the apparatus, a part of gas G discharged from a catalyst tower 12 wherein the $NH_3$ contained in the gas is decomposed into $N_2$ and $H_2O$ with $NH_3$ decomposing catalyst layer 13 is fed to NOx meter 16 and the concentration of NOx in the gas is determined therewith. Another part of the discharged gas is returned to stripping tower 7 with fan 21 through pipe 20, after the temperature of the gas was raised with pre-heater 22 according to circumstances. Responding to the value determined with NOx meter 16, the flow rate of gas G to be returned to stripping tower 7 is controlled with regulating valve 24. Remaining part of the gas G is discharged outside the system through pipe 23 installed between fan 21 and pre-heater 22. From pipe 15 connected to a bottom portion of stripping tower 7, effluent E resulted by removing ammonia from effluent A is discharged. At this time, it is desirable to control the concentration of oxygen in the gas flowing through either pipe.

Fifth embodiment of the present invention:

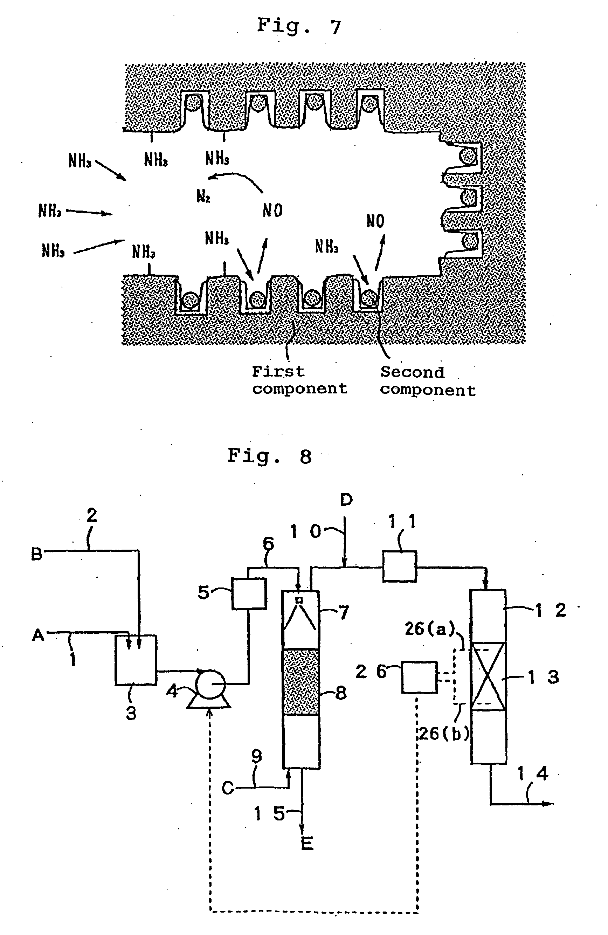

Fig. 8 shows the same apparatus (device system) as shown in Fig. 1 with the exception that the apparatus is planed to adjust the flow rate of effluent A to be supplied to stripping tower 7 responding to the difference in the determined values of temperature between plural measuring points in catalyst layer 13 instead of adjusting the amount of an $NH_3$-containing effluent to be supplied in the apparatus shown in Fig. 1.

In the apparatus shown in Fig. 8, temperature sensors 26(a), and 26(b) of device 26 for measuring temperature are provided at two points within catalyst layer 13, and the flow rate of effluent A supplied to a top portion of stripping tower 7 with pump 4 is adjusted responding to the difference in the values of the temperature within catalyst layer 13 determined by the temperature sensors 26(a) and 26(b). Although the temperature is determined at two points of the inlet portion and the outlet portion in catalyst layer 13 in the apparatus shown in Fig. 8, the temperature may be determined at three or more points.

Next, the examples in which a catalyst of the present invention was applied in the apparatus (device system) as shown in Fig. 8 are described.

Example 3

A test for treating an effluent was conducted by using the same catalyst as used in Example 1 and the apparatus as shown in Fig. 8 under the conditions shown in Table 1

However, when the difference in the temperatures determined by temperature sensors 26(a) and 26(b), respectively, exceeded 10°C, the flow of effluent A to be supplied to a top portion of stripping tower 7 with pump 4 was once stopped; when the difference in the temperatures was 5 to 10° C, effluent A in the amount defined according to the following equation was flowed; and when the difference in the temperatures was smaller than 5°C, the flow rate of effluent A was adjusted to 1.6 L/h (shown in Table 1).

$$F = (10 - \Delta T) \times 0.32$$

wherein F is flow rate (L/h) and $\Delta T$ is the difference in temperatures.

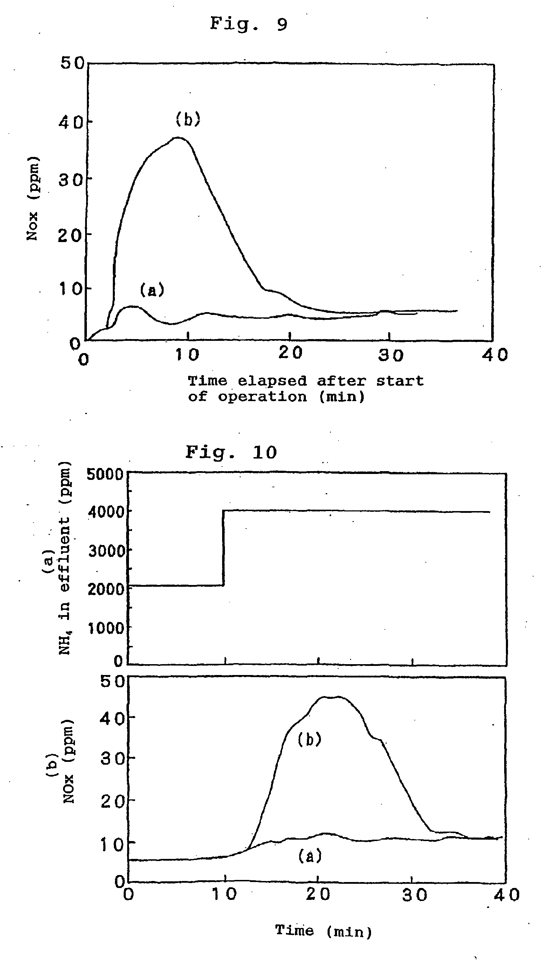

The results indicating the relation between the concentration of NOx in the gas at the outlet of a catalyst tower and the time elapsed after the operation of the apparatus was started and obtained in this test are shown by curve (a) in Fig. 9.

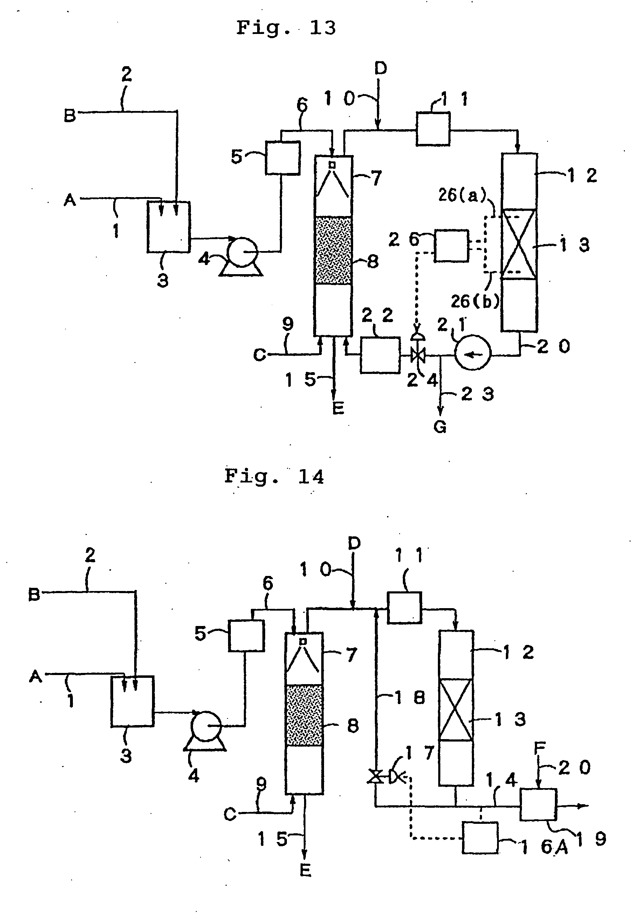

Further, the results obtained in the Comparative Example 1 described above in which a test for treating an effluent was conducted by using the apparatus as shown in Fig. 14 under the same conditions as used in Example 3 and indicated in Table 1 are shown by curve (b) in Fig. 9.

From Fig. 9, it can be understood that the concentration of NOx in the gas at the outlet of a catalyst tower at the time when the operation of the apparatus was started in Example 3 is considerably low compared with the Comparative Example 1.

Example 4.

A test for treating an effluent in case the concentration of $NH_4^+$ in the effluent is suddenly changed was conducted by using the same catalyst and apparatus as used in Example 3.

In this connection, the control of the flow rate of effluent A to be supplied with pump 4 to a top portion of stripping tower 7 responding to the difference in the temperatures determined by temperature sensors 26(a) and 26(b) of temperature measuring device 26 was conducted in the same way as in Example 3.

The relation between the concentration of NOx in the gas at the outlet of a catalyst tower and the time elapsed after the operation of the apparatus was started in this test is shown by curve (a) in Fig. 10.

Comparative Example 3

A test for treating an effluent was conducted by using the same apparatus as in Comparative Example 1 under the same conditions as in Example 4. The results thus obtained are shown by curve (b) in Fig. 10.

From Fig. 10, it can be understood that the concentration of NOx in the gas at the outlet of a catalyst tower when the concentration of $NH_4^+$ in the effluent is suddenly changed in Example 4 is considerably low compared with Comparative Example 3.

Sixth embodiment of the present invention:

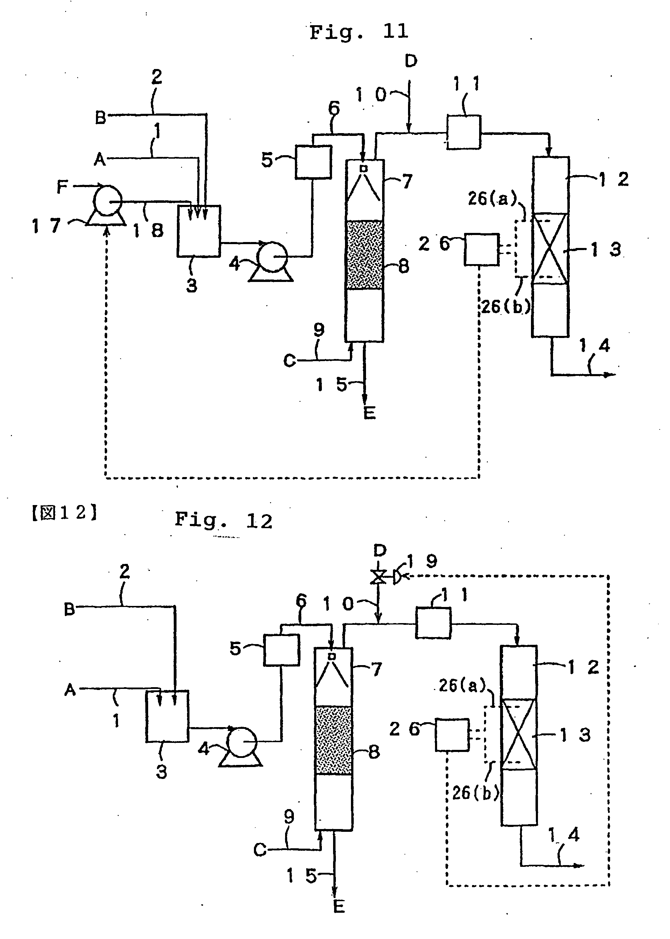

The apparatus (device system) shown in Fig. 11 is the same as in Fig. 8 with the exception that the apparatus is planed to adjust the concentration of $NH_3$ in an $NH_3$-containing effluent to be supplied instead of adjusting the flow rate of $NH_3$-containing effluent A to be supplied to stripping tower 7 in the apparatus shown in Fig. 8.

In the apparatus of Fig. 11, the ammonia stripped and contained in the gas is oxidized to decompose into $N_2$ and $H_2O$ on catalyst layer 13 and then discharged through pipe 14 into the atmosphere. The temperatures at plural points separated within catalyst layer 13 are determined with temperature measuring device 26 provided with temperature sensors 26(a) and 26(b), and the flow rate of water F supplied to tank 3 through pump 17 is varied responding to the difference of the determined values of temperature to adjust the concentration of $NH_3$ in the effluent supplied through pump 4 to a top portion of stripping tower 7. From pipe 15 connected to a bottom portion of stripping tower 7, effluent E resulted by removing ammonia from effluent A is discharged.

Seventh embodiment of the present invention:

The apparatus (device system) shown in Fig. 12 is the same as in Fig. 8 with the exception that the apparatus is planed to adjust the flow rate of an $NH_3$-containing gas to be contacted with catalyst layer 13 instead of adjusting the flow rate of an $NH_3$-containing effluent supplied to stripping tower 7 in the apparatus shown in Fig. 8.

In the apparatus of Fig. 12, the ammonia stripped and contained in the gas is oxidized to decompose into $N_2$ and $H_2O$ on catalyst layer 13 and then discharged through pipe 14 into the atmosphere. Temperatures at plural points within catalyst layer 13 are determined with temperature measuring device 26 provided with temperature sensors 26(a) and 26(b), and the flow rate of air D to be supplied through pipe 10 is controlled with regulating valve 19 responding to the difference of the determined values of temperature. From pipe 15 connected to a bottom portion of stripping tower 7, effluent E resulted by removing ammonia from effluent A is discharged.

Eighth embodiment of the present invention:

The apparatus shown in Fig. 13 is the same as in Fig. 8 with the exception that the apparatus is planed to adjust the concentration of NOx in the gas (gas G) at the outlet of catalyst tower 13 by circulating a part of gas G to stripping tower 7 instead of adjusting the flow rate of an $NH_3$-containing effluent supplied to stripping tower 7 in the apparatus shown in Fig. 8.

In the apparatus of Fig. 13, the gas containing the stripped ammonia is contacted with catalyst layer 13 to decompose the ammonia into $N_2$ and $H_2O$. A part of gas G $NH_3$ previously contained in which was decomposed into $N_2$ and $H_2O$ with catalyst layer 13 is circulated to stripping tower 7 with fan 21 through pipe 20, after the temperature of the gas was raised with pre-heater 22 according to circumstances. Temperatures at plural points within catalyst layer 13 are determined with temperature measuring device 26 provided with temperature sensors 26(a) and 26(b), and the flow rate of gas G to be circulated to stripping tower 7 is controlled with regulating valve 24 responding to the difference of the determined values of temperature. Remaining part of gas G is discharged outside the system through pipe 23 installed between fan 21 and pre-heater 22. From pipe 15 connected to a bottom portion of stripping tower 7, effluent E resulted by removing ammonia from effluent A is discharged.

Ninth embodiment of the present invention:

Fig. 14 shows the same apparatus (device system) used for treating an $NH_3$-containing effluent as shown in Fig. 1 with the exception that device 16A for determining the concentration of $N_2O$ is used in place of a device for determining the concentration of NOx (NOx meter 16) used in the apparatus shown in Fig. 1.

In the apparatus shown in Fig. 14, effluent A discharged from a thermal power plant and containing an ammonia nitrogen, and alkali B are supplied to tank 3 through pipe 1 and pipe 2, respectively, mixed in tank 3, and then fed to pre-heater 5 with pump 5. The effluent A preheated with pre-heater 5 up to about 100°C is supplied to a top portion of stripping tower 7 through pipe 6.

Within stripping tower 7 is placed packing material 8, steam C (including air) supplied through pipe 9 connected to a bottom portion of the tower as a carrier gas rises through the tower while efficiently contacting with effluent A in the tower to obtain a gas containing ammonia at a high concentration. The concentration of $NH_3$ in the gas obtained in stripping tower 7 is a few thousands to a few tens of thousands ppm.

The gas thus obtained is introduced into catalyst tower 12 after diluted with air D supplied through pipe 10 when necessary and preheated with pre-heater 11 up to a prescribed temperature according to circumstances. The ammonia stripped and contained in the gas is oxidized to decompose into $N_2$ and $H_2O$ on catalyst layer 13 having a relatively low power of oxidising $NH_3$ and then discharged into the atmosphere.

A part of the gas discharged from catalyst tower 12 is circulated to pre-heater 11 through pipe 18 and then introduced again into catalyst tower 12 to oxidatively decompose ammonia contained in the gas. The amount of the gas to be circulated is controlled by the opening of regulating valve 17 responding to the determined value of the concentration of $N_2O$ contained in the gas in pipe 14 determined by using device 16A for measuring the concentration of $N_2O$.

Further, the ammonia contained in the gas to be discharged through pipe 14 into the atmosphere is absorbed in device 19 for removing ammonia, specifically by acidic absorbing liquid F supplied through pipe 20, when necessary. It is possible to return the ammonia absorbed by absorbing liquid F into tank 3. From pipe 15 connected to a bottom portion of stripping tower 7, effluent E resulted by removing ammonia from effluent A is discharged.

The catalyst in catalyst layer 13 comprises a first component having an activity of reducing nitrogen oxides with ammonia and a second component having an activity of forming nitrogen oxides (NOx) from ammonia. Reaction temperature in catalyst layer 13 at this time is 250 to 500°C and preferably 350 to 450°C .

An example in which a catalyst of the present invention was applied in the apparatus (device system) as shown in Fig. 14 is described below.

Example 5

Ammonium paratungstate $((NH_4)_{10}H_{10} \cdot W_{12}O_{46} \cdot 6H_2O)$ in an amount of 2.5 kg and 2.33 kg of ammonium metavanadate were added to 67 kg of a slurry of metatitanic acid ($TiO_2$ content: 30 wt %, $SO_4$ content: 8 wt %) and mixed by using a kneader. The paste thus obtained was granulated, dried, and then calcined at 550°C for 2 hours. The granules thus obtained were ground to obtain powders as a first component of a catalyst. The powders had a composition of Ti/W/V = 91/5/4 (ratio of atoms).

On the other hand, 500 g of fine powders of silica (produced by Tomita Pharmaceuticals Co., Ltd.; trade name: Micon F) was added to 1 L of $1.33 \times 10^{-2}$ wt % of chloroplatinic acid ($H_2[PtCl_6] \cdot 6H_2O$), evaporated to dryness on a sand bath, and then calcined at 500°C for 2 hours in the air to prepare 0.01 wt % Pt · $SiO_2$ powders as a second component of the catalyst.

Next, 5.3 kg of silica · alumina type inorganic fibers and 17 kg of water were added to the mixture of 20 kg of the first component and 40.1 g of the second component, and kneaded to obtain a catalyst paste. Separately, a net-like product made of E glass fibers was impregnated with a slurry containing a titania, silica sol and polyvinyl alcohol, dried at 150°C, and cut into plural sheets to prepare catalyst substrates. Between two of the catalyst substrates (sheets) was held the catalyst paste described above and they were passed through press rollers to roll, thereby obtaining a plate-like product. After the plate-like product was air-dried in the atmosphere for 12 hours, it was calcined at 500°C for 2 hours to obtain an $NH_3$ decomposing catalyst A having a denitrating function.

In the catalyst thus obtained, the ratio of the second component to the first component (the second component/the first component) was 0.2/99.8. Pt content corresponded to 1 ppm excluding the catalyst substrates and inorganic fibers.

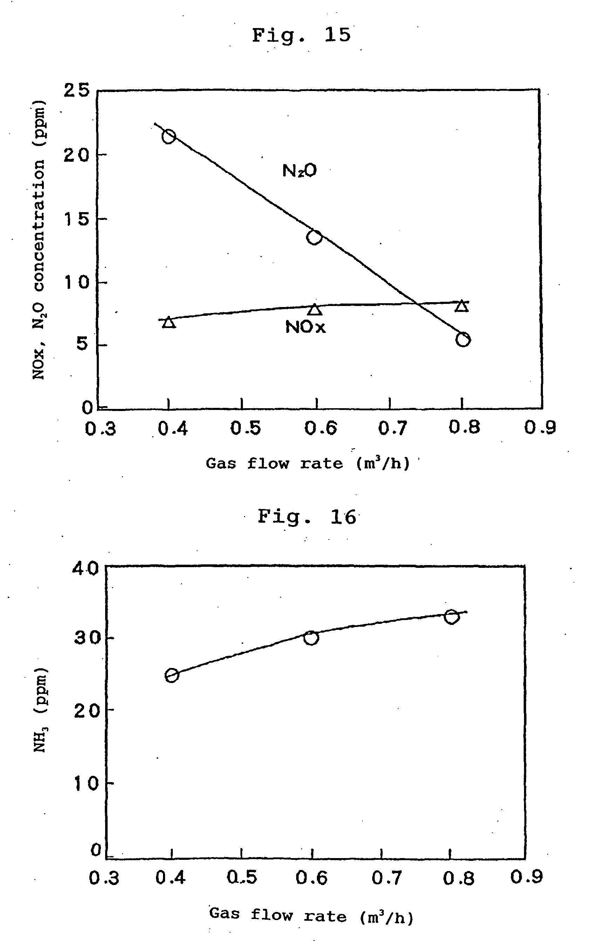

A test for treating an effluent was conducted by using the catalyst obtained in this example and the apparatus as shown in Fig. 14 under the conditions shown in Table 2. The relation between the concentrations of NOx and $N_2O$ in the gas at the outlet of a catalyst tower and the flow rate of the gas at the inlet of catalyst layer 13 is shown in Fig. 15. In this example, the concentration of the $N_2O$ was reduced while maintaining the concentration of the NOx at about the same level by increasing the flow rate of the gas at the inlet of catalyst layer 13.

Besides, the relation between the concentration of $NH_3$ in the gas at the outlet of catalyst layer 13 (catalyst tower 12) and the flow rate of the gas at the inlet of catalyst layer 13 is shown in Fig. 16. When the flow rate of the gas at the inlet of catalyst layer 13 was increased, the concentration of $NH_3$ in the gas at the outlet of catalyst 13 was increased. However, $NH_3$ decomposition ratio in catalyst layer 13 was higher than 99 % and the amounts of utilities such as heat sources and chemicals necessary for the treatment were scarcely increased even when the unreacted $NH_3$ was absorbed by an absorbing liquid, returned to tank 3, and then subjected to a treatment again.

Table 2

| Item | Condition |
|---|---|
| Rate of treating effluent | 1.6 L/h |
| Amount of $NH_4^+$ in effluent | 2,000 mg/L |
| Gas flow rate at inlet of catalyst layer | 0.4 to 0.8 $m^3$/h |
| Gas composition | $NH_3$: 5,000 to 10,000 ppm<br>$H_2O$: 28 %<br>Air: the remainder |
| Temperature | 400°C |
| Areal velocity | 5 to 10 m/h |

Tenth embodiment of the present invention:

While the apparatus described in the ninth embodiment of the present invention described above is excellent in cost efficiency since the amount of the energy necessary for heating a gas can be reduced, the same effects as in the ninth embodiment can be obtained even in the tenth embodiment of the present invention described below.

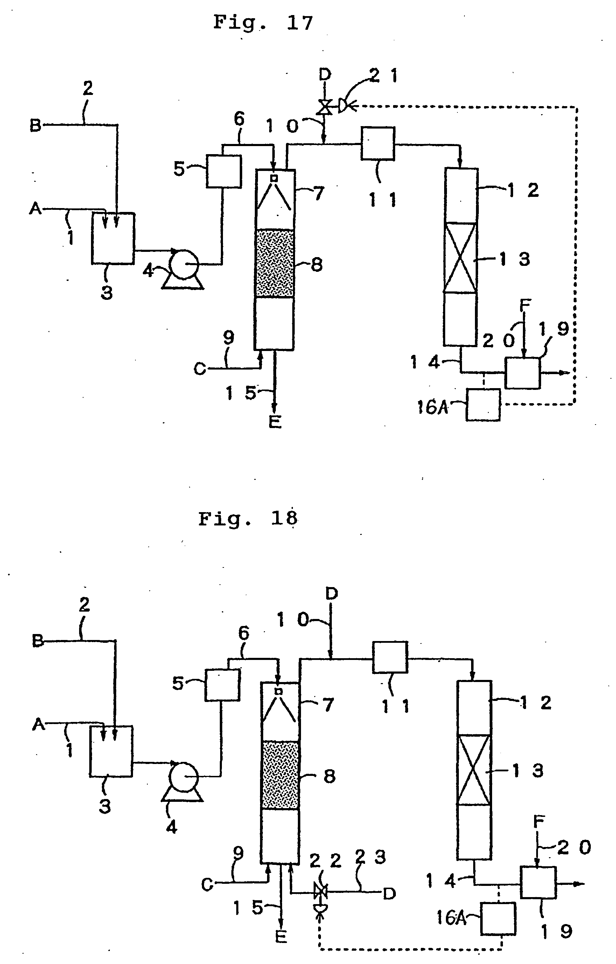

Fig. 17 shows the same apparatus (device system) as shown in Fig. 14 with the exception that the apparatus is planed to adjust the flow rate of air D supplied through pipe 10 to the gas discharged from stripping tower 7 with regulating valve 21 instead of adjusting the flow rate of the post-treatment gas to be circulated through pipe 18 in the apparatus as shown in Fig. 14.

The ammonia stripped and contained in the gas is oxidized to decompose into $N_2$ and $H_2O$ on catalyst layer 13 and then discharged through pipe 14 into the atmosphere. The concentration of $N_2O$ in the gas at the outlet of catalyst tower 12 is determined with device 16A for measuring the concentration of $N_2O$ installed at the outlet of catalyst tower 12, and the flow rate of air D supplied through pipe 10 is controlled with regulating valve 21 responding to the determined value of the $N_2O$ concentration.

Eleventh embodiment of the present invention:

Fig. 18 shows the same apparatus (device system) as in Fig. 14 with the exception that the apparatus is planed to adjust the flow rate of air D supplied through pipe 23 to a bottom portion of stripping tower 7 with regulating valve 22 instead of adjusting the flow rate of the post-treatment gas to be circulated through pipe 18 in the apparatus shown in Fig. 14.

The concentration of $N_2O$ in the gas at the outlet of catalyst tower 12 is determined with device 16A for measuring the concentration of $N_2O$ installed at the outlet of catalyst tower 12, and the flow rate of air D supplied through pipe 23 to stripping tower 7 is controlled with regulating valve 22 responding to the determined value of the $N_2O$ concentration.

Twelfth embodiment of the present invention:

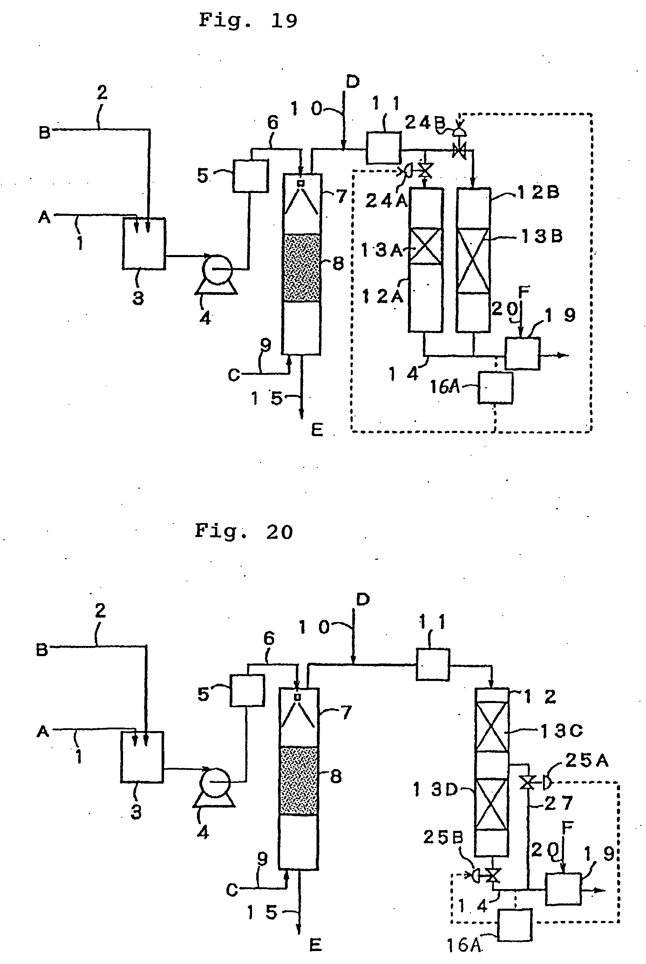

Fig. 19 shows the same apparatus (device system) as in Fig. 14 with the exception that two catalyst towers 12A and 12B are installed in parallel for the purpose of adjusting the volume of catalyst layers 13.

An ammonia-containing gas is introduced into catalyst tower 12A or/and 12B after diluted with air D supplied through pipe 10 when necessary and preheated with pre-heater 11 up to a prescribed temperature according to circumstances. The ammonia stripped and contained in the gas is oxidized to decompose into $N_2$ and $H_2O$ on catalyst layer 13A or/and 13B, and then discharged through pipe 14 into the atmosphere. Switching of the catalyst tower, into which an ammonia-containing gas is introduced, back and forth between catalyst tower 12A and 12B is performed responding to the determination of the concentration of $N_2O$ in the gas at the outlet of the catalyst towers.

The concentration of $N_2O$ in the gas at the outlet of the catalyst towers is determined with device 16A for measuring the concentration of $N_2O$ installed at the outlet of the catalyst towers, and the switching of the catalyst towers is performed with switching valves 24A and 24B responding to the determined value of the concentration of $N_2O$. That is, when the determined value of the concentration of the $N_2O$ rose due to the oxidative decomposition of ammonia gas on catalyst layer 13A or 13B, both catalyst layers 13A and 13B are used.

Thirteenth embodiment of the present invention:

Fig. 20 shows the same apparatus as in Fig. 14 with the exception that the apparatus is planed to adjust the volume of catalyst layer 13 contacting with a gas within one catalyst tower 12.

In the catalyst tower 12, two catalyst layers, 13C and 13D are arranged along the direction of the gas flow with a space in series, and one end of pipe 27 for taking a circuitous route around the lower catalyst layer 13D is connected to the catalyst tower at a position between catalyst layer 13C and catalyst layer 13D. Pipe 27 is provided with switching valve 25A, and the other end of pipe 27 is connected to pipe 14 connected to a bottom portion of catalyst tower 12.

The ammonia stripped and contained in the gas is oxidatively decomposed on catalyst layer 13C, further oxidized to decompose into $N_2$ and $H_2O$ on catalyst layer 13D according to circumstances, and then discharged through pipe 14 into the atmosphere.

Switching between an operation in which an ammonia-containing gas is contacted only with catalyst layer 13C and another operation in which the gas is contacted further with catalyst layer 13D is performed by changing the condition of switching valve 25A provided to pipe 27 and changing the condition of switching valve 25B provided to pipe 14 responding to the value of the concentration of $N_2O$ determined with device 16A used for measuring $N_2O$ concentration and installed at the outlet of catalyst tower 12. That is, when the determined value of the concentration of $N_2O$ rose due to the oxidative decomposition of ammonia on catalyst layer 13C or 13D, both catalyst layers 13C and 13D are used.

According to the embodiments using one of the apparatuses as shown in Figs. 14 to 20, a problem that when the concentration of $NH_3$ in the gas after subjected to a treatment in a catalyst tower was lowered, the concentration of NOx and the concentration of $N_2O$ in the gas at the outlet of a catalyst tower become slightly high is resolved, and the amount of hazardous substances produced can considerably be reduced.

INDUSTRIAL APPLICABILITY

According to the present invention, a problem that the concentration of NOx and the concentration of $N_2O$ in the gas at the outlet of a catalyst tower become high at the time when the operation of an apparatus for treating an $NH_3$-containing effluent was started or when the concentration of $NH_3$ in the gas to be treated was varied disappears, and the amount of hazardous substances produced can be reduced.

**Claims**

1. A method for treating an ammonia-containing effluent comprising a stripping step in which the ammonia ($NH_3$) contained in the $NH_3$-containing effluent is transferred from the effluent into a gas phase by contacting the effluent with a carrier gas, a step for decomposing the $NH_3$ into nitrogen and water by contacting the gas resulted at the stripping step and containing the $NH_3$ with a catalyst used for decomposing $NH_3$, at a prescribed temperature, **characterised in that** the method further comprises a step for determining the concentration of the nitrogen oxides (NOx) contained in the gas resulted at the $NH_3$ decomposing step, and a step for adjusting one or more of the following parameters:

   (a) the amount of the $NH_3$-containing effluent to be supplied, and
   (b) the concentration of the $NH_3$ contained in the $NH_3$-containing effluent

   so that the determined value of the concentration of the NOx becomes lower than a prescribed value.

2. The method for treating an $NH_3$-containing effluent according to claim 1 wherein the temperatures of the layer of the catalyst at plural points located along the direction of the gas flow at the $NH_3$ decomposing step are determined instead of determining the concentration of the NOx contained in the gas resulted at the $NH_3$ decomposing step, and one or more of the parameters (a) and (b) defined in claim 1 are adjusted responding to the difference between the determined temperatures instead of the concentration of the NOx.

3. The method for treating an $NH_3$-containing effluent according to claim 1 or 2 wherein the catalyst used for decomposing $NH_3$ comprises a first component having an activity of reducing NOx with $NH_3$ and a second component having an activity of forming NOx from $NH_3$.

4. The method for treating an $NH_3$-containing effluent according to claim 1 or 2 wherein the catalyst used for decomposing $NH_3$ comprises, as a first component, an oxide of titanium (Ti) and an oxide of one or more elements selected from the group consisting of tungsten (w), vanadium (v), and molybdenum (Mo), and, as a second component, a silica, zeolite, and/or alumina having one or more noble metals selected from the group consisting of platinum (Pt), iridium (Ir), rhodium (Rh), and palladium (Pd) supported thereon.

5. The method for treating an $NH_3$-containing effluent according to claim 1 wherein the catalyst used for decomposing $NH_3$ is a zeolite or comprises, as a main component, a zeolite.

6. The method for treating an $NH_3$-containing effluent according to claim 1 wherein the method further comprises a step for removing ammonia from a part of the gas resulted at the $NH_3$ decomposing step after the part of the gas was discharged outside the system.

7. A method for treating an $NH_3$-containing effluent comprising a stripping step in which the $NH_3$ contained in the $NH_3$-containing effluent is transferred from the effluent into a gas phase by contacting the effluent with a carrier gas, a step for decomposing the $NH_3$ into nitrogen and water by contacting the gas resulted at the stripping step and containing the $NH_3$ with a catalyst used for decomposing $NH_3$, at a prescribed temperature, and **characterised in that** the method further comprises a step for determining the concentration of the $N_2O$ contained in the gas resulted at the $NH_3$ decomposing step, and one of the following steps:

   (i) a step in which the flow rate of the carrier gas at the step for transferring the $NH_3$ contained in the $NH_3$-containing effluent into the gas phase is adjusted,
   (ii) a step in which a gas such as air is added to the $NH_3$-containing gas resulted at the step for transferring the $NH_3$ contained in the $NH_3$-containing effluent into the gas phase, and
   (iii) a step in which a part of the gas resulted at the $NH_3$ decomposing step is circulated to the catalyst layer.

8. The method for treating an NH$_3$-containing effluent according to claim 7 wherein the temperatures of the layer of the catalyst at plural points located along the direction of the gas flow at the NH$_3$ decomposing step are determined instead of determining the concentration of the N$_2$O contained in the gas resulted at the NH$_3$ decomposing step, and one or more of the steps (i), (ii), and (iii) defined in claim 7 are conducted responding to the difference between the determined temperatures instead of the concentration of the N$_2$O.

9. The method for treating an NH$_3$-containing effluent according to claim 7 or 8 wherein the catalyst used for decomposing NH$_3$ comprises a first component having an activity of reducing NOx with NH$_3$ and a second component having an activity of forming NOx from NH$_3$.

10. The method for treating an NH$_3$-containing effluent according to claim 7 or 8 wherein the catalyst used for decomposing NH$_3$ comprises, as a first component, an oxide of titanium (Ti) and an oxide of one or more elements selected from the group consisting of tungsten (W), vanadium (V), and molybdenum (Mo), and, as a second component, a silica, zeolite, and/or alumina having one or more noble metals selected from the group consisting of platinum (Pt), iridium (Ir), rhodium (Rh), and palladium (Pd) supported thereon.

11. The method for treating an NH$_3$-containing effluent according to claim 7 or 8 wherein the catalyst used for decomposing NH$_3$ is a zeolite or comprises, as a main component, a zeolite.

12. The method for treating an NH$_3$-containing effluent according to claim 7 or 8 wherein the method further comprises a step for removing ammonia from a part of the gas resulted at the NH$_3$ decomposing step after the part of the gas was discharged outside the system.

13. An apparatus for treating an NH$_3$-containing effluent (A) comprising a stripping device (7) in which the NH$_3$ contained in the NH$_3$-containing effluent is transferred from the effluent (A) into a gas phase by contacting the effluent (A) with a carrier gas (C), a device for decomposing the NH$_3$ into nitrogen and water by contacting the gas resulted in the stripping device and containing the NH$_3$ with a catalyst (13) used for decomposing NH$_3$, at a prescribed temperature, **characterised in that** the apparatus further comprises a device (16) for determining the concentration of the nitrogen oxides (NOx) contained in the gas resulted in the NH$_3$ decomposing device, and a device (4, 17) for adjusting one or more of the following parameters:

(a) the amount of the NH$_3$-containing effluent to be supplied,
(b) the concentration of the NH$_3$ contained in the NH$_3$-containing effluent,

so that the determined value of the concentration of the NOx becomes lower than a prescribed value.

14. An apparatus for treating an NH$_3$-containing effluent (A) comprising a stripping device (7) in which the NH$_3$ contained in the NH$_3$-containing effluent is transferred from the effluent (A) into a gas phase by contacting the effluent (A) with a carrier gas (C), a device for decomposing the NH$_3$ into nitrogen and water by contacting the gas resulted in the stripping device and containing the NH$_3$ with a catalyst (13) used for decomposing NH$_3$, at a prescribed temperature, **characterised in that** the apparatus further comprises a device (16A) for determining the concentration of the N$_2$O contained in the gas resulted in the NH$_3$ decomposing device, and one of the following means:

(i) means (22) in which the flow rate of the carrier gas at the step for transferring the NH$_3$ contained in the NH$_3$-containing effluent into the gas phase is adjusted,
(ii) means (21) in which a gas such as air is added to the NH$_3$-containing gas resulted at the step for transferring the NH$_3$ contained in the NH$_3$-containing effluent into the gas phase, and
(iii) means (17) in which a part of the gas resulted at the NH$_3$ decomposing step is circulated to the catalyst layer,

so that the determined value of the concentration of the N$_2$O becomes lower than a prescribed value.

**Patentansprüche**

1. Verfahren zur Behandlung eines Ammoniak enthaltenden Abwassers, das einen Strippungs- bzw. Austraihungauchritt aufweist, in dem der Ammoniak (NH$_3$), der in dem Ammoniak enthaltenden Abwasser enthalten ist, von dem Abwasser durch in Kontakt Bringen des Abwassers mit einem Trägergas in eine Gasphase überführt wird, einen Schritt zum Zerlegen des NH$_3$ in Stickstoff und Wasser durch in Kontaktbringen des Gases, das aus dem Strippu-

agsachritt resultiert und den $NH_3$ enthält, mit einem Katalysator, der zum Zerlegen des $NH_3$ verwendet wird, bei einer vorgeschriebenen Temperatur, **dadurch gekennzeichnet, dass** das Verfahren weiterhin einen Schritt zur Bestimmung der Konzentration der Stickoxide (NOx), die in dem Gas enthalten sind, das sich aus dem Schritt zum Zerlegen des $NN_3$ ergibt, und einen Schritt zum Einstellen eines oder mehrerer der folgenden Parameter aufweist:

(a) die Menge des zuzuführenden $NH_3$ enthaltenden Abwassers, und
(b) die Konzentration des $NH_3$, das in dem $NH_3$ enthaltenden Abwasser enthalten ist,

so dass der bestimmte Wert der Konzentration des NOx niedriger als ein vorgeschriebener Wert wird,

2. Verfahren zur Behandlung eines $NH_3$ enthaltenden Abwassers nach Anspruch 1, wobei die Temperaturen der Katalysatorschicht an mehreren Punkten, die entlang der Richtung das Gasflusses beim Schritt zum zerlegen des $NH_3$ angeordnet sind, bestimmt werden anstatt der Bestimmung der Konzentration des NOx, das in dem Gas enthalten ist, das aus dem Schritt zum Zerlegen des $NH_3$ resultiert, und wobei einer oder mehrere der Parameter (a) und (b), die in Anspruch 1 definiert wurden, in Antwort auf die Differenz zwischen den bestimmten Temperaturen anstatt der Nox-Konzentration eingestellt werden.

3. Verfahren zur Behandlung eines $NN_3$ enthaltenden Abwassers nach Anspruch 1 oder 2, wobei der Katalysator, der zum Zerlegen des $NH_3$ verwendet wird, einen ersten Bestandteil mit einer NOx-Reduktionsaktivität mit $NH_3$ und einen zweiten Bestandteil mit einer NOx-Bildungsaktivität aus $NH_3$ aufweist.

4. Verfahren zur Behandlung eines $NH_3$ enthaltenden Abwassers nach Anspruch 1 oder 2, wobei der Katalysator, der zur Zerlegung des $NH_3$ verwendet wird, als einen ersten Bestandteil ein Oxid von Titan (Ti) und ein Oxid von einem der Elemente Wolfram (W), Vanadium (V) oder Molybdän (Mo), und als einen zweiten Bestandteil Silica, zeolith und/oder Aluminium mit einem oder mehreren Edelmetallen wie z.B. Platin (Pt), Iridium (Ir), Rhodium (Rh) oder Palladium (Pd) darauf aufgetragen aufweist.

5. Verfahren zur Behandlung eines $NH_3$ enthaltenden Abwassers nach Anspruch 1, wobei der Katalysator, der zur Zerlegung des $NH_3$ verwendet wird, ein Zeolith ist oder als einen Hauptbestandteil Zeolith aufweist.

6. Verfahren zur Behandlung eines $NH_3$ enthaltenden Abwassers nach Anspruch 1, wobei das Verfahren des Weiteren einen Schritt zum Entfernen von Ammoniak aus einem Teil des Gases aufweist, das aus dem $NH_3$-Zerlegungaschritt resultiert, nachdem der Anteil des Gases außerhalb des Systems entlassen worden ist.

7. Verfahren zur Behandlung eines $NH_3$ enthaltenden Abwassers, das einen Strippungezehritt aufweist, bei dem der in dem $NH_3$ enthaltenden Abwasser enthaltene $NH_3$ von dem Abwasser in eine Gasphase überführt wird durch in Kontakt Bringen des Abwassers mit einem Trägergas, einen Schritt zur Zerlegung das $NH_3$ in Stickstoff und Wasser durch in Kontakt Bringen des Sasea, das sich aus dem Strippungsschritt ergibt und den $NH_3$ enthält, mit einem Katalysator, der zur Zerlegung des $NH_3$ verwendet wird, bei einer vorgeschriebenen Temperatur, und **dadurch gekennzeichnet, dass** das Verfahren weiterhin einen Schritt zur Bestimmung der Konzentration des $N_2O$ aufweist, das in dem Gas enthalten ist, das aus dem $NH_3$-Zerlegungsschritt resultiert, sowie einen der folgenden Schritte:

(i) einen Schritt, bei dem die Durchflussrate des Trägergases in dem Schritt zur Überführung des $NH_3$, der in dem $NN_3$ enthaltenden Abwasser enthalten ist, in die Gasphase eingestellt wird,
(ii) einen Schritt, bei dem ein Gas wie z. B. Luft zu dem $NH_3$ enthaltenden Gas hinzugefügt wird, das sich beim Schritt zum überführen des $NH_3$, der in dem $NH_3$ enthaltenden Wasser enthalten ist, in die Gasphase ergibt, und
(iii) einen Schritt, bei dem ein Teil des Gases, das sich aus dem $NH_3$-Zerlegungeschritt ergibt, in die Katalysatorschicht zirkuliert wird.

8. Verfahren zur Behandlung eines $NH_3$ enthaltenden Abwassers nach Anspruch 7, wobei die Temperaturen der Katalysatorschicht bei mehreren Punkten, die entlang der Richtung des Gasflusses beim $NH_3$-Zerlegungsschritt angeordnet sind, bestimmt werden anstatt des Bestimmens der Konzentration des $N_2O$, das in dem Gas enthalten ist, das sich aus dem $NH_3$-Zerlegungsschritt ergibt, und wobei einer oder mehrere der Schritte (i), (ii) und (iii), die in Anspruch 7 definiert wurden, ausgeführt wird/werden als Antwort auf die Differenz zwischen den bestimmten Temperaturen anstatt der $N_2O$-Konzentration.

9. Verfahren zur Behandlung eines $NH_3$ enthaltenden Abwassers nach Anspruch 7 oder 8, wobei der Katalysator, der zur Zerlegung des $NH_3$ verwendet wird, einen ersten Bestandteil mit einer Nox-Reduktionsaktivitat mit $NH_3$ und

einen zweiten Bestandteil mit einer Nox-Bildungsaktivitat aus $NH_3$ aufweist.

10. Verfahren zur Behandlung eines $NH_3$ enthaltenden Abwassers nach Anspruch 7 oder 8, wobei der Katalysator, der zur Zerlegung des $NH_3$ verwendet wird, als einen ersten Bestandteil ein oxid von Titan (T1) und ein oxid von z. B. Wolfram (W), vanadium (V) oder Molybdän (Mo), und als einen zweiten MaAtandtell Silica, zeolith und/oder Aluminium mit einem oder mehreren Edelmetallen wie z. B. Platin (Pt), Iridium (Ir), Rhodium (Rh) oder Palladium (Pd) darauf aufgetragen aufweist.

11. verfahren zur Behandlung eines $NH_3$ enthaltenden Abwassers nach Anspruch 7 oder 8, wobei der für die Zerlegung des $NH_3$ verwendete Katalysator ein Zeolith ist oder als Hauptbestandteil zeolith aufweist.

12. Verfahren zur Behandlung eines $NH_3$ enthaltenden Abwasser nach Anspruch 7 oder 8, wobei das Verfahren des Weiteren einen schritt zum Entfernen des Ammoniaks aus einem Teil des Gases auf weist, das aus dem $NH_3$-Zerlegungeschritt resultiert, nachdem der Anteil des Gases außerhalb des Systems entlassen wurde.

13. Vorrichtung zur Behandlung eines $NH_3$ enthaltenden Abwassers (A) mit einer Strippungs- bzw. Austreibungsvorrichtung (7), in der der in dem $NH_3$ enthaltenden Abwasser enthaltende $NH_3$ aus dem Abwasser (A) in eine Gasphase überführt wird durch in Kontaktbringen des Abwassers (A) mit einem Trägergas (C), einer Vorrichtung zur Zerlegung des $NH_3$ in Stickstoff und Wasser durch in Kontakt Bringen des Gases, das sich aus der Strippungavorrichtung ergibt und das den $NH_3$ enthält, mit einem Katalysator (13), der zur Zerlegung des $NH_3$ verwendet wird, bei einer vorgeschriebenen Temperatur, **dadurch gekennzeichnet, dass** die Vorrichtung des Weiteren eine Einrichtung (16) zur Bestimmung der Stickoxid (NOx)-Konzentration, das in dem sich aus dem $NH_3$-Zerlegungsschritt ergebenden Gas enthalten ist, und eine Einrichtung (4, 17) zum Einstellen eines oder mehrerer der folgenden Parameter aufweist:

(a) die Menge das zuzuführenden $NH_3$ enthaltenden Abwassers,
(b) die Konzentration des in dem $NH_3$ enthaltenden Abwasser enthaltenden Ammoniaks,

so dass der bestimmte wert der NOx-Konzentration niedriger als ein vorbestimmter Wert wird.

14. Vorrichtung zur Behandlung eines $NH_3$ enthaltenden Abwassers (A) mit einer strippungs- bzw. Austreibungsvorrichtung (7), in dem der in dem $NH_3$ enthaltenden Abwasser enthaltene $NH_3$ aus dem Abwasser (A) durch in Kontakt Bringen des Abwassers (A) mit einem Trägergas (C) in eine Gasphase überführt wird, einer Vorrichtung zur Zerlegung dem $NH_3$ in Stickstoff und Wasser durch in Kontakt Bringen des Gases, das sich aus der Strippunegvorrichtung ergibt und den $NH_3$ enthält, mit einem Katalysator (13), der zur Zerlegung des $NH_3$ verwendet wird, bei einer vorgeschriebenen Temperatur, **dadurch gekennzeichnet, dass** die Vorrichtung des Weiteren eine Einrichtung (16A) zum Bestimmen der Konzentration des $N_2O$, das in dem sich aus der $NH_3$-Zerlegungsvorrichtung ergebenden Gases enthalten ist, und eines der folgenden Mittel aufweist:

(i) Mittel (22), in dem die Durchfluasrate des Trägergases in dem Schritt des Oberführens des $NH_3$, der in dem $NH_3$ enthaltenden Abwasser enthalten ist, in die Gasphase eingestellt wird,
(ii) mittel (21), in dem ein Gas wie z. B. Luft zu dem $NH_3$ enthaltenden Gas hinzugefügt wird, das sich aus dem Schritt zum Überführen des $NH_3$, der in dem $NH_3$ enthaltenden Abwasser enthalten ist, in die Gasphase ergibt, und
(iii) Mittel (17), in dem ein Teil des Gases, das sich aus dem $NH_3$-Zerlegungsschritt ergibt, in die Katalysatorschicht zirkuliert wird,

so dass der bestimmte Wert der $N_2O$-Konzentration geringer als ein vorgeschriebener Wert wird.

## Revendications

1. Procédé de traitement d'un effluent contenant de l'ammoniaque comprenant une étape de rectification dans laquelle l'ammoniaque ($NH_3$) contenue dans l'effluent contenant du $NH_3$ est transférée de l'effluent en une phase gazeuse en mettant en contact l'effluent avec un gaz porteur, une étape destinée à décomposer le $NH_3$ en azote et en eau en mettant en contact le gaz qui résulte de l'étape de rectification et contenant le $NH_3$ avec un catalyseur utilisé pour décomposer le $NH_3$, à une température prescrite, **caractérisé en ce que** le procédé comprend en outre une étape destinée à déterminer la concentration des oxydes d'azote (NOx) contenus dans le gaz qui résulte de l'étape

de décomposition du $NH_3$, et une étape destinée à ajuster un ou plusieurs des paramètres suivants :

(a) la quantité de l'effluent contenant du $NH_3$ devant être fournie, et
(b) la concentration du $NH_3$ contenue dans l'effluent contenant du $NH_3$

de sorte que la valeur déterminée de la concentration des NOx devienne inférieure à une valeur prescrite.

**2.** Procédé de traitement d'un effluent contenant du $NH_3$ selon la revendication 1, dans lequel les températures de la couche du catalyseur en plusieurs points situés le long de la direction de l'écoulement du gaz à l'étape de décomposition de $NH_3$ sont déterminées au lieu de déterminer la concentration des NOx contenus dans le gaz qui résulte de l'étape de décomposition de $NH_3$, et un ou plusieurs des paramètres (a) et (b) définis dans la revendication 1 sont ajustés en réponse à la différence entre les températures déterminées au lieu de la concentration des $NO_x$.

**3.** Procédé de traitement d'un effluent contenant du $NH_3$ selon la revendication 1 ou 2, dans lequel le catalyseur utilisé pour décomposer le $NH_3$ comprend un premier composant présentant une activité de réduction des NOx par le $NH_3$ et un second composant présentant une activité de formation de NOx à partir de $NH_3$.

**4.** Procédé de traitement d'un effluent contenant du $NH_3$ selon la revendication 1 ou 2, dans lequel le catalyseur utilisé pour décomposer le $NH_3$ comprend, en tant que premier composant, un oxyde de titane (Ti) et un oxyde d'un ou de plusieurs éléments sélectionnés parmi le groupe constitué de tungstène (W), de vanadium (V) et de molybdène (Mo), et, en tant que second composant, de la silice, une zéolithe, et/ou de l'alumine contenant un ou plusieurs métaux nobles sélectionnés parmi le groupe constitué de platine (Pt), d'iridium (Ir), de rhodium (Rh) et de palladium (Pd) supportés sur celle-ci.

**5.** Procédé de traitement d'un effluent contenant du $NH_3$ selon la revendication 1, dans lequel le catalyseur utilisé pour décomposer le $NH_3$ est une zéolithe ou comprend, en tant que composant principal, une zéolithe.

**6.** Procédé de traitement d'un effluent contenant du $NH_3$ selon la revendication 1, dans lequel le procédé comprend en outre une étape destinée à supprimer l'ammoniaque d'une partie du gaz qui résulte de l'étape de décomposition du $NH_3$ après que la partie du gaz a été évacuée à l'extérieur du système.

**7.** Procédé de traitement d'un effluent contenant du $NH_3$, comprenant une étape de rectification dans laquelle le $NH_3$ contenu dans l'effluent contenant du $NH_3$ est transféré de l'effluent dans une phase gazeuse en mettant en contact l'effluent avec un gaz porteur, une étape destinée à décomposer le $NH_3$ en azote et en eau en mettant en contact le gaz qui résulte de l'étape de rectification et contenant le $NH_3$ avec un catalyseur utilisé pour décomposer le $NH_3$, à une température prescrite, et **caractérisé en ce que** le procédé comprend en outre une étape destinée à déterminer la concentration du $N_2O$ contenu dans le gaz qui résulte de l'étape de décomposition de $NH_3$, et l'une des étapes suivantes:

(i) une étape dans laquelle le débit du gaz porteur à l'étape de transfert du $NH_3$ contenu dans l'effluent contenant le $NH_3$ dans la phase gazeuse est ajusté,
(ii) une étape dans laquelle un gaz tel que l'air est ajouté au gaz contenant du $NH_3$ qui résulte de l'étape de transfert du $NH_3$ contenu dans l'effluent contenant du $NH_3$ dans la phase gazeuse, et
(iii) une étape dans laquelle une partie du gaz qui résulte de l'étape de décomposition de $NH_3$ est mise en circulation vers la couche de catalyseur.

**8.** Procédé de traitement d'un effluent contenant du $NH_3$ selon la revendication 7, dans lequel les températures de la couche du catalyseur en plusieurs points situés le long de la direction de l'écoulement du gaz à l'étape de décomposition de $NH_3$ sont déterminées au lieu de déterminer la concentration du $N_2O$ contenu dans le gaz qui résulte de l'étape de décomposition de $NH_3$, et une ou plusieurs des étapes (i), (ii), et (iii) définies dans la revendication 7 sont exécutées en réponse à la différence entre les températures déterminées au lieu de la concentration du $N_2O$.

**9.** Procédé de traitement d'un effluent contenant du $NH_3$ selon la revendication 7 ou 8, dans lequel le catalyseur utilisé pour décomposer le $NH_3$ comprend un premier composé ayant une activité de réduction des NOx avec du $NH_3$ et un second composant ayant une activité de formation de NOx à partir du $NH_3$.

**10.** Procédé de traitement d'un effluent contenant du $NH_3$ selon la revendication 7 ou 8, dans lequel le catalyseur utilisé pour décomposer le $NH_3$ comprend, en tant que premier composant, un oxyde de titane (Ti) et un oxyde d'un ou

**EP 1 314 698 B1**

de plusieurs éléments sélectionnés parmi le groupe constitué de tungstène (W), de vanadium (v) et de molybdène (Mo), et, en tant que second composant, de la silice, une zéolithe, et/ou de l'alumine contenant un ou plusieurs métaux nobles sélectionnés parmi le groupe constitué de platine (Pt), d'iridium (Ir), de rhodium (Rh), et de palladium (Pd) supportés sur celle-ci.

**11.** Procédé de traitement d'un effluent contenant du $NH_3$ selon la revendication 7 ou 8, dans lequel le catalyseur utilisé pour décomposer le $NH_3$ est une zéolithe ou comprend, en tant que composant principal, une zéolithe.

**12.** Procédé de traitement d'un effluent contenant du $NH_3$ selon la revendication 7 ou 8, dans lequel le procédé comprend en outre une étape d'élimination de l'ammoniaque d'une partie du gaz qui résulte de l'étape de décomposition du $NH_3$ après que la partie du gaz a été évacuée à l'extérieur du système.

**13.** Appareil de traitement d'un effluent contenant du $NH_3$ (A), comprenant un dispositif de rectification (7) dans lequel le $NH_3$ contenu dans l'effluent contenant du $NH_3$ est transféré depuis l'effluent (A) dans une phase gazeuse en mettant en contact l'effluent (A) avec un gaz porteur (C), un dispositif destiné à décomposer le $NH_3$ en azote et en eau en mettant en contact le gaz qui résulte du dispositif de rectification et contenant le $NH_3$ avec un catalyseur (13) utilisé pour décomposer le $NH_3$, à une température prescrite, **caractérisé en ce que** l'appareil comprend en outre un dispositif (16) destiné à déterminer la concentration des oxydes d'azote (NOx) contenus dans le gaz qui résulte du dispositif de décomposition de $NH_3$, et un dispositif (4, 17) destiné à ajuster un ou plusieurs des paramètres suivants :

(a) la quantité de l'effluent contenant du $NH_3$ devant être fournie,
(b) la concentration du $NH_3$ contenu dans l'effluent contenant du $NH_3$,

de sorte que la valeur déterminée de la concentration du NOx devienne inférieure à une valeur prescrite.

**14.** Appareil de traitement d'un effluent contenant du $NH_3$ (A) comprenant un dispositif de rectification (7) dans lequel le $NH_3$ contenu dans l'effluent contenant du $NH_3$ est transféré depuis l'effluent (A) dans une phase gazeuse en mettant en contact l'effluent (A) avec un gaz porteur (C), un dispositif destiné à décomposer le $NH_3$ en azote et en eau en mettant en contact le gaz qui résulte du dispositif de rectification et contenant le $NH_3$ avec un catalyseur (13) utilisé pour décomposer le $NH_3$, à une température prescrite, **caractérisé en ce que** le dispositif comprend en outre un dispositif (16A) destiné à déterminer la concentration du $N_2O$ contenu dans le gaz qui résulte du dispositif de décomposition de $NH_3$, et l'un des moyens suivants :

(i) un moyen (22) dans lequel le débit du gaz porteur à l'étape destinée à transférer le $NH_3$ contenu dans l'effluent contenant du $NH_3$ dans la phase gazeuse est ajusté,
(ii) un moyen (21) dans lequel un gaz tel que l'air est ajouté au gaz contenant du $NH_3$ qui résulte de l'étape destinée à transférer le $NH_3$ contenu dans l'effluent contenant du $NH_3$ dans la phase gazeuse, et
(iii) un moyen (17) dans lequel une partie du gaz qui résulte de l'étape de décomposition de $NH_3$ est mise en circulation vers la couche de catalyseur, de sorte que la valeur déterminée de la concentration du $N_2O$ devient inférieure à une valeur prescrite.

Fig. 1

Fig. 2

Fig. 3

Time (min)

Fig. 4

## Fig. 5

## Fig. 6

Fig. 7

First component          Second component

Fig. 8

Fig. 9

Time elapsed after start
of operation (min)

Fig. 10

Time (min)

EP 1 314 698 B1

Fig. 11

【図12】

Fig. 12

27

Fig. 13

Fig. 14

Fig. 15

Fig. 16

Fig. 17

Fig. 18

Fig. 19

Fig. 20